# EUROPÄISCHE PATENTSCHRIFT

(11) **EP 1 937 781 B1**
(45) Veröffentlichungstag und Bekanntmachung des Hinweises auf die Patenterteilung: **02.12.2009**
(21) Anmeldenummer: 06806360.1
(22) Anmeldetag: 18.10.2006
(51) Int. Cl.: C09C 1/00

(54) **FARBIGES EFFEKTPIGMENT MIT SCHICHT AUS DISKRETEN METALLTEILCHEN, VERFAHREN ZU DESSEN HERSTELLUNG UND DESSEN VERWENDUNG**
COLOR EFFECT PIGMENT WITH A LAYER MADE OF DISCRETE METAL PARTICLES, METHOD FOR THE PRODUCTION THEREOF AND ITS USE
PIGMENT COLORE A EFFET COMPRENANT UNE COUCHE CONSTITUEE DE PARTICULES METALLIQUES DISCRETES, SON PROCEDE DE PRODUCTION, ET SON UTILISATION

(30) Priorität: 18.10.2005 DE 102005050094
(43) Veröffentlichungstag der Anmeldung: 02.07.2008
(73) Patentinhaber: Secutech International Pte. Ltd., Singapore 069443 (SG); Eckart GmbH, 91235 Velden (DE)
(72) Erfinder: DOMNICK, Ralph, 91054 Buckenhof (DE); BAUER, Georg, A-4070 Eferding (AT); WOLFRUM, Christian, 91052 Erlangen (DE); KREMITZL, Hans-Jörg, 90542 Eckental (DE); KLAUMÜNZER, Thomas, 91301 Forchheim (DE); SCHUSTER, Thomas, 91207 Lauf (DE)
(74) Vertreter: UEXKÜLL & STOLBERG
(86) Internationale Anmeldenummer: PCT/EP2006/010043
(87) Internationale Veröffentlichungsnummer: WO 2007/045452

(56) Entgegenhaltungen:
- WO-A-02/31058
- US-A- 3 440 075
- US-A- 5 116 664
- US-A1- 2004 244 649
- GREIWE K ET AL: "A NEW CLASS OF ALUMINIUM PIGMENT" PAINT AND INK INTERNATIONAL, REDHILL, GB, Bd. 10, Nr. 4, Juli 1997 (1997-07), Seiten 14,16-17, XP000198751

## Beschreibung

Die Erfindung betrifft ein farbiges Effektpigment, ein Verfahren zur Herstellung desselben sowie Verwendungen.

Aus dem Stand der Technik sind mehrere Verfahren zur Herstellung von Effektpigmenten bekannt. Dabei werden entweder nasschemisch oder mittels CVD- oder PVD-Verfahren verschiedene dünne Schichten auf natürlichen oder künstlich hergestellten mikrometergroßen Plättchen aufgebracht. Alternativ können auch verschiedene dünne Schichten auf einem folienartigen Substrat aufgebracht, nachfolgend vom Substrat abgelöst und dann auf die für Effektpigmente charakteristische Größe zerkleinert werden.

Effektpigmente, bei denen auf einem transparenten Substrat eine den Farbeffekt hervorrufende Abfolge von Interferenz-bildenden Schichten aufgebracht wird, sind unter dem allgemeinen Namen "Perlglanzpigmente" bekannt. Dabei besteht das transparente Substrat in der Regel aus einem natürlichen oder synthetischen Glimmer oder aus synthetisch hergestellten Metalloxiden. Die Interferenz-bildenden Schichten umfassen Metalloxide.

Die US 6,485,556 B1 (Engelhard Corp.) beschreibt ein Perlglanzpigment, bei dem ein auf aufwändige Weise gewonnenes TiO₂-Substrat mit Interferenz-Schichten aus Chromoxid und Eisenoxid beschichtet ist.

Die US 6,596,070 B1 und die US 6,689,205 B1 (beide von Merck) beschreiben plättchenförmige Perlglanzpigmente mit einem transparenten Kern und einer abwechselnd aus hochbrechenden und niedrigbrechenden Metalloxidschichten gebildeten Schichtabfolge.

Die US 6,884,289 B2 (Merck) offenbart farbige Perlglanzpigmente, bei denen ein transparentes plättchenförmiges Substrat mit mindestens 3 Schichten eines dielektrischen Materials und zusätzlich mit absorbierenden organischen oder anorganischen Pigmentpartikeln beschichtet ist.

Die DE 101 20 179 A1 beschreibt ein Glanzpigment, bei dem als Substrat transparente plättchenförmige Schichtsilikate, insbesondere Glimmer, Talkung, Kaolin und dgl. verwendet werden, auf denen eine aus mehreren Schichten gebildete Schichtabfolge aufgebracht ist.

Die DE-OS 1 467 468 offenbart ein Glimmerschuppenpigment, bei dem sich auf durchscheinenden Glimmerschuppen ein Überzug aus Metalloxidteilchen befindet.

Alle derartigen Perlglanzpigmente weisen zwar einen durch den Schichtaufbau bedingten mehr oder weniger intensiven Interferenz-Farbeffekt auf, haben jedoch stets eine schlechte Dekkung und zeigen keinerlei metallischen Glanz.

Im Gegensatz zu den relativ transparenten Perlglanzpigmenten gibt es auch unterschiedliche Metalleffektpigmente, deren Farbe entweder durch die Reflexionseigenschaften des Metalls, oder durch sonstige farbgebende Substanzen auf der Oberfläche hervorgerufen wird.

Beispielsweise offenbart die US 4,158,074 (Showa Aluminum KK) Metallpigmente, auf deren Oberfläche farbgebende Metallsalze aufgebracht sind. Die US 5,931,996 (ECKART) beschreibt Aluminiumpigmente, welche mit einer Farbpigmente enthaltenden Metalloxidschicht gekapselt sind. Derartige Pigmente besitzen intensive Farben und einen metallischen Glanz, der jedoch gegenüber Mischungen aus Metalleffektpigmenten und Farbpigmenten verringert ist. Außerdem weisen diese Pigmente keinen Farbflop auf.

Es ist zur Überwindung dieses Nachteils versucht worden, Pigmente aus einer Kombination eines Spiegels, einer dielektrischen Schicht und einer Absorberschicht herzustellen. Derartige Pigmente weisen oft einen vom Betrachtungswinkel abhängigen Farbeindruck auf.

Die US 3,438,796 (DuPont) beschreibt alternierende, durch PVD-Prozesse hergestellte Schichtabfolgen aus Aluminium und SiO₂, welche ein metallisches Erscheinungsbild aufweisen. Durch Variation der SiO₂-Schichtdicken kann der Farbeindruck dieser Pigmente variiert werden. Nachteilig ist, dass die Produkte nur äußerst aufwändig und in geringer Menge zugänglich sind.

Die US 3,536,520 (DuPont) offenbart ein Verfahren zur Herstellung eines metallisch glänzenden Pigments, bei dem in einem ersten Schritt in flüssiger Phase ein Glas- oder Glimmersubstrat mit einer metallischen Nickelschicht beschichtet wird, auf welcher dann in einem zweiten Schritt eine Interferenzschicht aus Nickel- oder Titanoxid aufgebracht wird. Die damit erzielten Interferenzfarben sind allerdings relativ schwach.

Die US 5,607,504 (BASF AG) beschreibt farbige Glanzpigmente, bei denen auf einem aus einem Metalleffektpigment gebildeten Kern nasschemisch oder mittels Gasphasenreaktion eine farblose niedrigbrechende dielektrische Schicht und darüber eine durch CVD-Verfahren aufgebrachte, hochbrechende selektiv absorbierende Schicht aus einem farbigen oder eingefärbten Metalloxid aufgebracht ist.

Die US 5,624,486 (BASF AG) beschreibt Glanzpigmente, bei denen plättchenförmige Substrate (Metallicpigmente) mit einer ersten Schicht aus Siliciumoxid, Aluminiumoxid oder Aluminiumoxidhydrat und einer zweiten Schicht aus einem Metall und/oder einem nicht selektiv absorbierenden, d. h. schwarzen, Metalloxid beschichtet sind. Bei diesen Pigmenten wird stets ein (weitgehend) geschlossener Metallfilm aufgebracht.

Die US 5,733,364 (BASF AG) offenbart ein weiteres Glanzpigment, bei dem eine weitere Schicht aus einem transparenten oder selektiv absorbierenden Material aufgebracht sein kann. Sämtliche Prozessschritte werden dabei jedoch in einem Gasphasenprozess durchgeführt, der relativ aufwändig und schwer kontrollierbar ist.

Die US 6,783,584 B2 (Merck) beschreibt farbige plättchenförmige Pigmente, bei denen das Substrat - ein Metallicpigment - erst mit einer Schutzschicht aus Silicium- und/oder Aluminiumoxid, dann mit einer Interferenzschicht aus einem hochbrechenden Metalloxid (z. B. TiO₂) und darauf mit einem dichten, halbtransparenten Metallfilm überzogen ist. Sämtliche Beschichtungsschritte werden hier in Dispersion durchgeführt.

Die EP 1 235 882 B1 (Engelhard Corp.) beschreibt Edelmetall-Farbeffekt-Materialien, bei denen ein plättchenförmiges Substrat verkapselt ist mit einer reflektierenden Edelmetallschicht, einer transparenten Schicht aus SiO₂ oder MgF₂, sowie einer selektiv Licht-absorbierenden Schicht. Auch hier wird explizit darauf hingewiesen, dass alle Schichten eine gleichmäßige, homogene und filmähnliche Struktur aufweisen.

Die US 5,135,812 (Flex Products, Inc.) beschreibt ein Verfahren zur Herstellung eines Glanzpigments, bei dem unterschiedliche Schichten mittels PVD-Verfahren auf einer Trägerfolie abgeschieden werden, welche mit einer Trennmittelschicht versehen werden kann. Damit kann eine Schichtabfolge aus semitransparenter Metallschicht - transparenter dielektrischer Abstandsschicht - metallischer Reflektorschicht - transparenter dielektrischer Abstandsschicht - semitransparenter Metallschicht erhalten werden. Diese Schichtabfolge kann in nachfolgenden Prozessschritten von der Trägerfolie abgelöst und beispielsweise mit Hilfe von Ultraschall auf die gewünschte Partikelgröße zerkleinert werden.

Die US 6,686,042 (Flex Products, Inc.) beschreibt optisch variable Folien oder Pigmente, bei denen auf einer metallischen Reflektorschicht zusätzlich eine selektiv absorbierende Schicht und darauf die dielektrische Abstandsschicht und semitransparente Absorberschicht aufgebracht sind.

Die US 6,521,036 B1 (SICPA Holding S.A.) offenbart optisch variable, mittels PVD-Verfahren hergestellt Pigmente mit einer symmetrischen Schichtabfolge. Die Schichtabfolge umfasst einen Kern aus einer totalreflektierenden Metallschicht aus einer korrosionsbeständigen Aluminiumlegierung, eine Dielektrikumsschicht (SiO₂ oder MgF₂) und eine semitransparente teilreflektierende Schicht.

Nach dem oben beschriebenen Stand der Technik werden die Farbeffekte stets mit geschlossenen und möglichst dichten Schichten erzielt.

Im Gegensatz dazu werden nach der US 3,440,075 (DuPont) auf ein transparentes plättchenförmiges Substrat, bestehend aus Glimmer oder Glas, diskrete Metallpartikel aus Silber aufgefällt und optional mittels einer wasserhaltigen Metalloxidschicht stabilisiert. Nachteilig bei dieser Art von Pigmenten ist, dass sich damit nur gelbliche und relativ schwache Farbtöne erzielen lassen.

In der US 2004/0244649 A1 wird ein Verfahren zur Beschichtung eines Trägermaterials mit einem (Edelmetall-)Kolloid beschrieben. Dabei ist unmittelbar auf dem Substrat eine Schicht aufgebracht, in welche Metallpartikel eingebettet sind. Die Farben der vorgeschlagenen Pigmente wird durch die Lichtabsorption der Metallpartikel bestimmt.

Die DE 102 08 036 A1 (November AG) offenbart ein Verfahren, bei dem auf einer transparenten Kunststofffolie über Verdampfungs- und Sputterprozesse erst eine Spiegelschicht, darauf eine dielektrische Abstandsschicht und darüber eine. Absorberschicht aus diskreten Metallpartikeln aufgebracht werden. Damit kann eine besonders intensive Farbwirkung erzielt werden, die wie beim Fabry-Perot-Effekt winkelabhängig ist. Die Schichtabfolge weist zudem ein durch die Metallpartikel hervorgerufenes charakteristisches und maschinenlesbares Absorptionsspektrum auf und ist damit zur Herstellung fälschungssicherer Markierungen geeignet. Es gibt jedoch keinen Hinweis darauf, dass auf diese Weise Effektpigmente erhalten werden können. Zudem werden die Farbeffekte hier durch Sputtern erzielt, einem Verfahren, das für größere Flächen, wie sie bei Pigmenten zum Tragen kommen, völlig unwirtschaftlich wäre.

Die DE 100 41 038 A1 offenbart sphärische Metalloxidpartikel mit einem Partikeldurchmesser von 5 nm bis 10.000 nm. Zur Verbesserung der Anbindung an verschiedene Matrizes weisen die Metalloxidpartikel auf der Oberfläche partikuläre Erhebungen auf.

Die US 5,116,664 beschreibt ein Kompositmaterial mit einem Glimmer-Kern, auf den eine Ti₂O-Schicht aufgebracht ist, die wiederum mit einer Schicht aus metallischen Pulverpartikeln überzogen ist, welche mindestens ein Metall aus der Gruppe bestehend aus Kobalt, Nickel, Kupfer, Zink, Zinn, Gold und Silber enthalten.

K. Greiwe und K. Franze (Paint & Ink International, 1997, Seiten 14, 16 und 17) beschreiben ein Pigment aus Aluminiumflocken mit einer dünnen Schicht aus Al₂O₃ an ihrer Oberfläche, welche durch eine kontrollierte Katalysatorgesteuerte Oxidation des Aluminium-Substratkerns erzeugt wird.

Die WO 2002/31058 offenbart Interferenzpigmente mit Farbkippeffekt, bestehend aus einem plättchenförmigen Reflektorkern, einer dielektrischen Abstandsschicht auf dem Reflektorkern, eine Reflektorschicht auf der dielektrischen Schicht und einer Absorberschicht auf der Reflektorschicht. Der plättchenförmige Reflektorkern wird von einem Glimmer-Substrat gebildet, das mit einer metallischen Reflektorschicht überzogen ist. Bei der Absorberschicht auf der Reflektorschicht handelt es sich um eine geschlossene, durchgehende Schicht aus Titan-haltigem, TiO₂-freien Absorptionsmaterial. Nachteilig ist, dass das. Aufbringen der Absorberschicht auf die Reflektorschicht aufwendige und kostspielige vakuumtechnische Verfahren erfordert.

Aufgabe der Erfindung ist es, die Nachteile nach dem Stand der Technik zu beseitigen. Es soll insbesondere ein Effektpigment mit intensiver Färbung und je nach Ausgestaltung mit mehr oder weniger starken Abhängigkeit der Farbe vom Beobachtungswinkel bzw. Farbflops bereit gestellt werden. Der metallische Glanz der erfindungsgemäßen Effektpigmente soll vergleichbar mit demjenigen reiner Metallpigmente sein. Weiterhin sollen die erfindungsgemäßen Effektpigmente spektral genau definierte Absorptionsbanden mit sehr hoher absoluter Intensität aufweisen. Die Absorptionseigenschaften des Effektpigments soll möglichst maschinell erfassbar sein. Eine weitere Aufgabe der vorliegenden Erfindung besteht in der Angabe eines Verfahrens zur kostengünstigen Herstellung des Effektpigments.

Diese Aufgabe wird durch die Merkmale der Ansprüche 1, 27, 35 und 36 gelöst. Zweckmäßige Ausgestaltungen der Erfindung ergeben sich aus den Merkmalen der Ansprüche 2 bis 26 und 28 bis 34.

Nach Maßgabe der Erfindung ist ein Effektpigment mit
a) einem plättchenförmigen metallischen Reflektorkern,
b) einer auf dem Reflektorkern aufgebrachten Abstandsschicht aus einem dielektrischen Material und
c) einer auf der Abstandsschicht aufgebrachten semitransparenten Absorberschicht vorgesehen, umfassend im Wesentlichen diskrete Metallpartikel mit einem mittleren Durchmesser von 1 bis 100 nm.

Das erfindungsgemäße Vorsehen einer aus Metallpartikeln bzw. Clustern bestehenden semitransparenten Absorberschicht in einem durch eine Abstandsschicht vorgegebenen Abstand von einer als Spiegel wirkenden Oberfläche des aus einem Metall hergestellten Reflektorkerns bewirkt bei Einstrahlung von Licht eine elektrodynamische Wechselwirkung der Cluster untereinander sowie der Cluster mit der Oberfläche des Reflektorkerns. Wenn das von der Oberfläche auf die aus den Metallpartikeln gebildete Absorberschicht zurückgeworfene elektromagnetische Feld in der gleichen Phase wie die einstrahlende elektromagnetische Welle ist, kommt es zur Resonanz. Der Absorptionskoeffizient übertrifft die Summe der Absorptionskoeffizienten der einzelnen Schichten; die Absorption der Metallpartikel wird in diesem Fall erheblich verstärkt. Ebenfalls zur Verstärkung trägt der so genannte Fabry-Perot-Effekt bei: Die durch Mehrfachreflektionen zwischen Absorberschicht und Oberfläche hervorgerufenen Interferenzeffekte bewirken eine Abschwächung oder Verstärkung bestimmter Wellenlängenbereiche, wodurch winkelabhängige Farbeffekte hervorgerufen werden. Ein solches System ist durch charakteristische und winkelabhängige Absorptionspeaks mit hoher Intensität gekennzeichnet.

Bei den die semitransparente Absorberschicht bildenden Metallpartikeln handelt es sich um diskrete metallische Cluster. Die Metallpartikel bilden insbesondere keine geschlossene Schicht. Jedes der Metallpartikel kann ein resonanzfähiges Individuum darstellen.

Nach einem Ausgestaltungsmerkmal hat es sich als zweckmäßig erwiesen, dass die Schichtabfolge unter einem Beobachtungswinkel von 45° im Wellenlängenbereich zwischen 300 und 800 nm eine Absorption mit einem Maximalwert von mindestens 60%, vorzugsweise 80% und besonders vorzugsweise 90%, aufweist. Dies ermöglicht eine brillante metallisch glänzende Färbung des Effektpigments.

Vorteilhafterweise wird die Schichtabfolge, z. B. beginnend mit der Abstandsschicht, unmittelbar auf der Oberfläche des Reflektorkerns mittels eines Beschichtungsvorgangs aufgebracht. Bei einem solchen Beschichtungsvorgang erweist sich als vorteilhaft, dass die Reflektorkerne möglichst ebene Plättchen bilden, damit diese später beim Aufbringen in einem Lack plan nebeneinander auf dem zu lackierenden Gegenstand zu liegen kommen und einen hohen metallischen Glanz erzeugen.

Vorteilhafterweise ist auf der Absorberschicht zumindest eine Schutzschicht aufgebracht. Die Schutzschicht verhindert ein Ablösen und/oder Korrodieren der diskreten Metallpartikel.

Nach einer bevorzugten Ausgestaltung weist der metallische Reflektorkern eine mittlere Schichtdicke von 15 bis 1000 nm auf. Er hat einen mittleren Durchmesser von 1 bis 500 µm, bevorzugt 5 bis 100 µm. Als mittlerer Durchmesser wird hier der d₅₀-Wert der Summendurchgangsverteilung der Größenverteilungskurve, wie sie üblicherweise mittels Laserbeugungsverfahren (Frauenhofer Beugung) mittels geeigneter Geräte, wie das Cilas 1064, gemessen wird, verstanden. In einer besonders bevorzugten Ausgestaltung ist der metallische Reflektorkern ein plättchenförmiges Metallpigment. Dieses plättchenförmige Metallpigment kann aus Aluminium, Kupfer, Zink, Eisen, Titan, Chrom, Silber, Gold, Nickel, Kobalt oder Legierungen dieser Metalle bestehen. In besonderer Weise eignen sich dabei Aluminiumpigmente, die auch ohne weitere Beschichtung bereits einen starken metallischen Glanz nach Aufbringung auf Gegenstände mittels Lack zeigen. Eine Aufbringung auf plane und spiegelnde Oberflächen kann den metallischen Eindruck noch verstärken. Weiterhin eignen sich als metallische Reflektorkerne nicht metallische plättchenförmige Substrate, welche mit einer zusätzlich aufgebrachten metallischen Reflektorschicht beschichtet sind. Beispiele hierfür sind metallisierte plättchenförmige Metalloxide oder Schichtsilikate, wobei plättchenförmiges SiO₂ oder plättchenförmiges Al₂O₃ besonders bevorzugt sind. Derartige Pigmente sind beispielsweise in der EP 1 438 359 A1 offenbart, die hiermit unter Bezugnahme aufgenommen ist.

Die plättchenförmigen metallischen Reflektorkerne weisen Formfaktoren, d. h. das Verhältnis der mittleren Längsausdehnung zur mittleren Dicke, in einem Bereich von 10 bis 7.000, bevorzugt von 50 bis 1.000 und besonders bevorzugt von 70 bis 200, auf.

Hinsichtlich der Abstandsschicht hat es sich als zweckmäßig erwiesen, dass sie eine Dicke von 20 bis 1000 nm, bevorzugt 80 bis 600 nm, hat und somit die Absorption des resultierenden Dünnschichtaufbaus in einem für das Auge gut sichtbaren Bereich maximal ist. Die Abstandsschicht kann aus anorganischen oder organischen Materialien hergestellt sein. Bei den anorganischen Materialien kann es sich um Metalloxide, Metalloxidhydrate, Metallnitride, Metalloxynitride, Metallfluoride, Metallcarbide, Mischoxide, Mischnitride oder Oxynitride, insbesondere Siliziumoxid, Siliciumoxidhydrate, Siliciumcarbid, Siliciumnitrid, Aluminiumoxid, Aluminiumnitrid, Aluminiumoxidhydrat, Zinnoxid, Zinnnitrid, Titanoxid, -nitrid oder Magnesiumfluorid handeln. Als organische Materialien eignen sich insbesondere die folgenden Polymere: Polycarbonat (PC), Polyethylen (PE), Polypropylen (PP), Polyurethan (PU), Polyimid (PI), Polystyrol (PS), Polymethacrylat (PMA), Polyvinylalkohol (PVA), Polyacrylat (PA) oder Nitrocellulose (NC).

Das jeweilige Material der dielektrischen Schicht bestimmt zudem die Stärke des Farbflops des Pigmentes. Werden optisch dichtere Materialien (z. B. Titanoxid) gewählt, fällt der Farbflop schwächer aus. Bei optisch durchlässigeren Materialien (z. B. Siliziumoxid) fällt der Farbflop hingegen stärker aus. Dementsprechend kann die Stärke des Farbflops durch geeignete Materialauswahl je nach gewünschter Anwendung verändert werden.

Die den Reflektorkern umhüllende dielektrische Abstandsschicht kann in ihrer Dicke variiert werden. In diesem Fall erscheint das resultierende Effektpigment in unterschiedlichen Farben. Mit Beschichtungen im Sol-Gel-Verfahren lassen sich transparente Abstandsschichten mit Dicken bis zu einem Mikrometer in gut beherrschbaren und steuerbaren Prozessen herstellen. Dies ermöglicht eine einfache Herstellung einer solchen Abstandsschicht.

In einer weiteren bevorzugten Ausführungsform wird die dielektrische Abstandsschicht mittels einer chemischen Beschichtung und/oder Oberflächenmodifizierung aktiviert, um die Metallpartikel besser auf die Abstandsschicht binden zu können. Derartige aktivierende Beschichtungen werden bevorzugt mit organofunktionellen Silanen durchgeführt. Herbei werden vorteilhafterweise Epoxysilane, Mercaptosilane, Isocyanatosilane oder Aminosilane verwendet.

Nach einer weiteren Ausgestaltung können die Metallpartikel direkt oder indirekt mit der Abstandsschicht verbunden sein. Die vorgeschlagenen Ausgestaltungen ermöglichen eine adsorptive Bindung der Metallpartikel auf der Abstandsschicht bzw. eine Einbringung der Metallpartikel in einer Matrix. Vorzugsweise können die Metallpartikel kovalent oder durch Chemisorption an die Abstandsschicht gebunden werden.

Es hat sich als zweckmäßig erwiesen, dass die Metallpartikel diskrete Inseln mit einer durchschnittlichen Größe der Metallpartikel von 1 bis höchstens 100 nm, vorzugsweise 2 bis 50 nm und besonders bevorzugt von 3 bis 35 nm, bilden. Die Metallpartikel bestehen vorzugsweise aus metallisch leitfähigen Materialien. Insbesondere bestehen die Metallpartikel aus: Gold, Silber, Kupfer, Palladium, Platin, Nickel, Titan, Chrom, Zink, Zinn, Indium, Kobalt oder Legierungen dieser Materialien.

Die semitransparente Absorberschicht umfasst im wesentlichen Metallpartikel in nanopartikulärer Form. Unter einer nanopartikulären Form werden Metallpartikel unterhalb einer Größe von 300 nm verstanden. Mehr als 90 Gew.%, bevorzugt mehr als 95 Gew.% und besonders bevorzugt mehr als 99 Gew.% der Metallpartikel, bezogen auf die gesamte Menge des eingesetzten Metalls der semitransparenten Absorberschicht, liegen in nanopartikulärer Form vor. Es werden mithin keine durchgehenden Metallschichten gebildet, wie man sie aus dem Stand der Technik kennt.

Die Metallpartikel decken die Oberfläche der mit einer Abstandsschicht versehenen Effektpigmente zu einem großen Teil ab. Sie lagern sich ab einem bestimmten Bedeckungsgrad bevorzugt zu Inseln zusammen. Die Oberflächenabdeckung beträgt 20 bis 100%, bevorzugt 30 bis 100% und besonders bevorzugt 50 - 100 % der gesamten Oberfläche. Dies kann mittels REM-Aufnahmen an einer geeigneten Anzahl Effektpigmente (ca. 10. Stück) verifiziert werden. Als Bezugspunkt liegt hierbei die gesamte Oberfläche der mit Abstandsschicht versehenen Effektpigmente zugrunde, wobei jedoch einzelne freie Stellen innerhalb der Metallpartikelinseln nicht mit gezählt werden.

In einer bevorzugten Ausführungsform sind die diskreten Metallpartikel von einer dielektrischen Matrix umhüllt und/oder in die insgesamt semitransparenten Absorberschicht eingebettet. Hierdurch wird ein mechanisch stabiler Verbund der Metallpartikel erreicht.

Die Schichtdicke der die Abstandsschicht umhüllenden insgesamt semitransparenten Absorberschicht beträgt maximal das fünffache und bevorzugt maximal das doppelte des mittleren Durchmessers der diskreten Metallpartikel. Innerhalb dieses relativ engen Dickenbereiches kommen die oben erwähnten elektromagnetischen Wechselwirkungen der Metallpartikel mit dem metallischen Reflektorkern in besonders vorteilhafter Weise zur Geltung.

In einer besonders bevorzugten Ausführungsform beträgt der mittlere Durchmesser der diskreten Metallpartikel 10 bis 25 nm und die Schichtdicke der insgesamt semitransparenten Absorberschicht 20 bis 40 nm.

Des Weiteren können die Metallpartikel einzeln mit einer Schutzschicht überzogen werden, so dass diese gegen Umwelteinflüsse stabilisiert werden oder mit Molekülen umgeben sein, die eine Stabilisierung der Metallpartikel hervorrufen und/oder die Anbindung der Metallpartikel an die Abstandsschicht ermöglichen.

Vorteilhafterweise ist die gesamte Absorberschicht mit einer dichten Schutzschicht überdeckt. Das ermöglicht eine Stabilisierung des Effektpigments gegenüber Umwelteinflüssen, wie z. B. Korrosion durch Wasser oder Sauerstoff.

Die Schutzschicht sowohl auf dem Metallpartikel selbst als auch die auf der Absorberschicht dient dem Schutz vor mechanischer Beschädigung und chemischer Beeinflussung. Sie kann aber auch das charakteristische Farbspektrum in definierter Weise verändern und erhöht dadurch die Komplexität des Schichtaufbaus und muss somit bei der Erreichung einer gewünschten Farbe berücksichtigt werden. Die Schutzschicht kann aus einem der folgenden, für elektromagnetische Wellen durchlässigen Materialien hergestellt werden: organische Kunstharze, Metalloxide, Metallnitride, Metalloxynitride, Metallcarbide, Metallfluoride, insbesondere aus Siliziumoxid, -carbid, -nitrid, Zinnoxid, -nitrid, Aluminiumoxid oder -nitrid. Diese Materialien sind chemisch im Wesentlichen inert und feuchtigkeitsunempfindlich.

Die zu beschichtenden Reflektorkerne können vor der Beschichtung unterschiedliche Färbungen aufweisen, wobei die durch die Schichtabfolge bewirkten optischen Effekte in unerwarteter Weise durch eine Abweichung des Reflektorkerns vom idealen Spiegel beeinflusst werden können. Entsprechend der Erfindung erweist es sich dabei als eine vorteilhafte Ausgestaltung, wenn die elektromagnetische Wellen reflektierende Oberfläche des Reflektorkerns mehr als 50% Reflexion über zumindest einen Teil des sichtbaren Spektrums zeigt. Darüber hinaus erweist es sich als vorteilhaft, wenn die Absorberschicht eine Reflexion von weniger als 50% über zumindest einem Teil des sichtbaren Spektrums aufweist.

Das Effektpigment kann vorteilhafterweise so ausgebildet werden, dass alle Schichten zusammen das eingestrahlte Licht weniger als 90% absorbieren und somit die darunter liegenden Färbung des Reflektorkerns noch gut erkennbar ist.

Nach weiterer Maßgabe der Erfindung ist ein Verfahren zur Herstellung des erfindungsgemäßen Effektpigments mit folgenden Schritten vorgesehen:
aa) Beschichten plättchenförmiger metallischer Reflektorkerne mit einer aus einem dielektrischen Material hergestellten' Abstandsschicht und
bb) Aufbringen einer insgesamt semitransparenten Absorberschicht auf die Abstandsschicht, wobei die Absorberschicht im Wesentlichen diskrete Metallpartikel mit einem mittleren Durchmesser von 1 bis 100 nm aufweist.

Nach einer vorteilhaften Ausgestaltung wird auf die Absorberschicht zumindest eine Schutzschicht aufgebracht.

Nach einem weiteren Ausgestaltungsmerkmal ist vorgesehen, die Schichten der Schichtabfolge, insbesondere die Abstandsschicht und die Schutzschicht, zumindest teilweise auf nasschemischem Weg aus Lösungen abzuscheiden. In einer besonders bevorzugten Ausführungsform erfolgt Schritt aa) und/oder das Aufbringen der Schutzschicht mittels nasschemischer Sol-Gel-Verfahren.

Darüber hinaus kommen insbesondere PVD- und/oder CVD-Verfahren und dgl. in Betracht. Daneben ist es auch möglich, dass die Schichten der Schichtabfolge zumindest teilweise mittels Dünnschichttechnologie hergestellt werden. Es wird insoweit auf die im Eingang zitierten Anmeldungen der Firmen Flex Products, Merck, BASF und DuPont verwiesen.

Die diskreten Metallpartikel werden zweckmäßigerweise in einem lösungsbasierten Hetero-Koagulationsprozess aufgebracht. Beim Hetero-Koagulationsprozess handelt es sich um ein Verfahren, wobei eine Sorte von Partikeln auf einer anderen Sorte von Partikeln gebunden wird, wobei sich die charakteristische Ausdehnung der Partikel deutlich unterscheidet. Im Besonderen sind dabei die einen Partikel (Metallpartikel, sphärisch) metallischer Natur mit einem Durchmesser von 2 bis 100 nm, und die anderen Partikel die mit einer dielektrischen Schicht beschichteten plättchenförmigen Reflektorkerne mit einem Durchmesser von 2 bis 20 µm. Es hat sich als vorteilhaft herausgestellt, wenn sowohl die dielektrisch beschichteten Reflektorkerne als auch die metallischen Nanopartikel vor der Hetero-Koagulation einer Oberflächenfunktionalisierung unterzogen werden, in der Art, dass diese Oberflächenfunktionalisierungen im Idealfall miteinander kovalent Wechselwirken können und somit eine Fixierung der Nanopartikel auf der Absorberschicht ermöglichen oder durch Physisorption oder durch Chemisorption an der Oberfläche gebunden werden. Nur exemplarisch angeführt sei die Reaktion amino-funktionalisierter Nanopartikel mit glycidyl- oder isocyanato-funktionalisierten beschichteten Reflektorkernen. Dem Fachmann ist eine Vielzahl solcher geeigneter Verfahren bekannt. Ein derartiges Verfahren hat den Vorteil, dass bereits vordefinierte und gut charakterisierbare Nanometallpartikel zum Einsatz kommen können und somit eine hohe Prozesssicherheit gegeben ist. Bei einer solchen Aufbringung kann es vorteilhaft sein, den Hetero-Koagulationsschritt mehrmals, besonders bevorzugt zweimal, zu wiederholen, wenn im ersten Schritt noch keine ausreichende Belegung erfolgt ist. Die Analyse der Belegung kann mit bekannten Analyseverfahren ermittelt werden.

In einer weiteren Ausgestaltung ist es aber auch möglich, die diskreten Metallpartikel bzw. Nanopartikel nasschemisch insitu durch Reduktion entsprechender Metallsalze zu fällen und so direkt auf den Reflektorkernen abzuscheiden. Bei dieser Art der Auffällung von Nanopartikeln ist jedoch extrem auf die genaue Einhaltung der Reaktionsparameter (Temperatur, Konzentrationen, spezifische Oberflächen des Substrates, ...) zu achten, um zu gleichmäßigen Farbeffekten zu gelangen.

Wegen der weiteren Ausgestaltungsmerkmale der Effektpigmente wird auf die vorangegangenen Ausführungen verwiesen.

Die erfindungsgemäßen farbigen Effektpigmente werden meist in Pulverform oder als Paste angeboten. Die erfindungsgemäßen farbigen Effektpigmente können jedoch auch Verwendung finden in vorteilhaften Angebotsformen wie Trockenpräparate und Pigmentpräparationen. Hier sind beispielsweise Pellets, Würstchen, Tabletten, Brickets oder Granulate zu nennen.

Ferner finden die erfindungsgemäßen farbigen Effektpigmente Verwendung in Farben, Lacken, Pulverlacken, Druckfarben, Kunststoffen, kosmetischen Formulierungen, keramischen Materialien, Papier, Gläsern oder Sicherheitsanwendungen.

Nach einem bevorzugten Ausgestaltungsmerkmal kann das Effektpigment in einen Lack eingebracht sein, wobei der Lack wiederum auf eine Werkstoffoberfläche aufgebracht sein kann. Das ermöglicht ein Aufbringen eines solchermaßen ausgebildeten metallisch-glänzenden farbigen Pigments auf einen zu beschichtenden Gegenstand.

Gängige Beispiele sind Lacke zur Verarbeitung auf Gegenständen des täglichen Gebrauchs, wie z. B. Automobile bzw. deren Karosserieteile und dgl.. Dabei wird das beschichtete Pigment in einem Lack mit einer vorgegebenen Dicke aufgebracht. Eine solche Lackierung ist dauerhaft sichtbar; sie ist sehr stabil. Die Lackschicht kann zweckmäßigerweise bestehen aus dem Fachmann bekannten organischen und/oder anorganischen Polymeren wie z. B. gesättigten oder ungesättigten Polyesterharzen, Alkydharzen, Polycarbonaten, Amino- oder Amidoharzen, Phenolharzen, Keton- oder Aldehydharzen, Isocyanatharzen, Epoxidharzen, Polyethylen, Polypropylen, Polyvinylchlorid, Polytetrafluorethylen, Polyvinylalkoholen oder -ethern, Polyacrylaten- oder methacrylaten, Polystyrol, Siliconharzen, etc..

Eine Verwendung der erfindungsgemäßen Pigmente zur Pigmentierung von Druckfarben gestattet auf Grund der Maschinenlesbarkeit der Markierungen auch den Einsatz für Sicherheitsanwendungen, z. B. für Eintrittskarten, fälschungssichere Etiketten für hochwertige Güter oder sonstige Dokumente.

Insbesondere vorteilhaft ist auch die Verwendung der Pigmente in kosmetischen Formulierungen, z. B. Lippenstiften, Nagellacken, Stiften, Make-ups, Shampoos, losen und gepressten Pulvern oder Lidschatten. Insbesondere im Augenbereich sind nämlich, auf Grund gesetzlicher Vorgaben, mit bestehenden Pigmenten kaum metallisch glänzende und farbstarke Einfärbungen erzielbar.

Nachfolgend werden anhand der Zeichnungen Ausführungsbeispiele der Erfindung näher erläutert. Es zeigen:
- Fig. 1: eine schematische Querschnittsansicht eines ersten Effektpigments,
- Fig. 2: eine schematische Querschnittsansicht eines zweiten Effektpigments,
- Fig. 3: eine schematische Querschnittsansicht der Aufbringung des Effektpigments gemäß Fig. 1 oder Fig. 2 auf einem Gegenstand mit Hilfe eines Lacks,
- Fig. 4: ein gerechnetes und gemessenes Transmissionsspektrum einer glatten metallischen Schicht sowie gemessenes Transmissionsspektrum einer Absorberschicht der selben Dicke,
- Fig. 5: gemessene Reflexionsspektren von Schichtfolgen bestehend aus: a) Spiegelschicht - transparente Abstandsschicht - semitransparente glatte Metallschicht, und b) Spiegelschicht - transparente Abstandsschicht - semitransparente Metall-Metallpartikelschicht aus diskreten Partikeln,

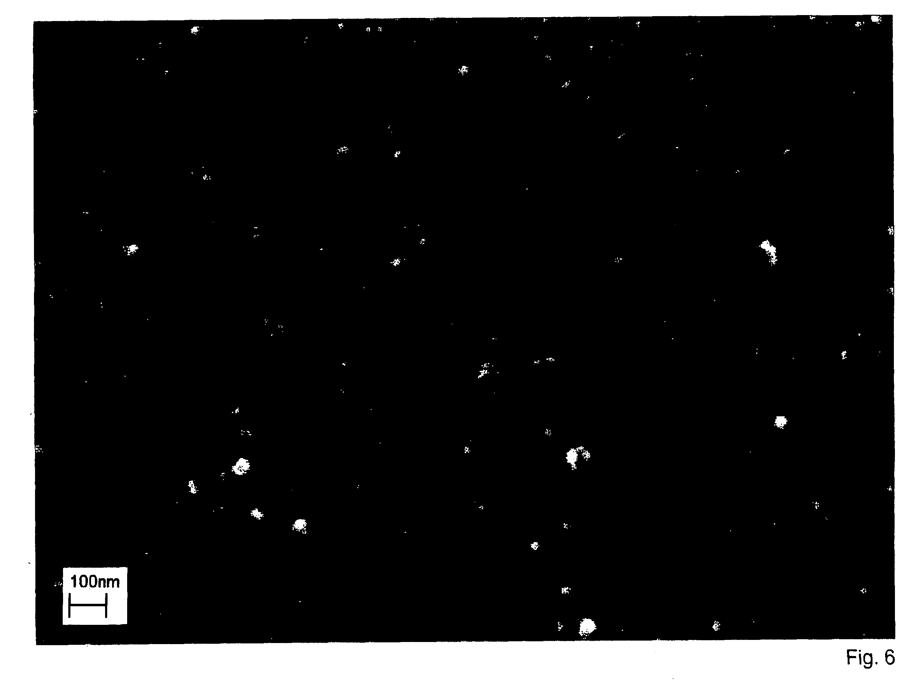

- Fig. 6: REM-Aufnahme des erfindungsgemäßen Beispiels 1d und

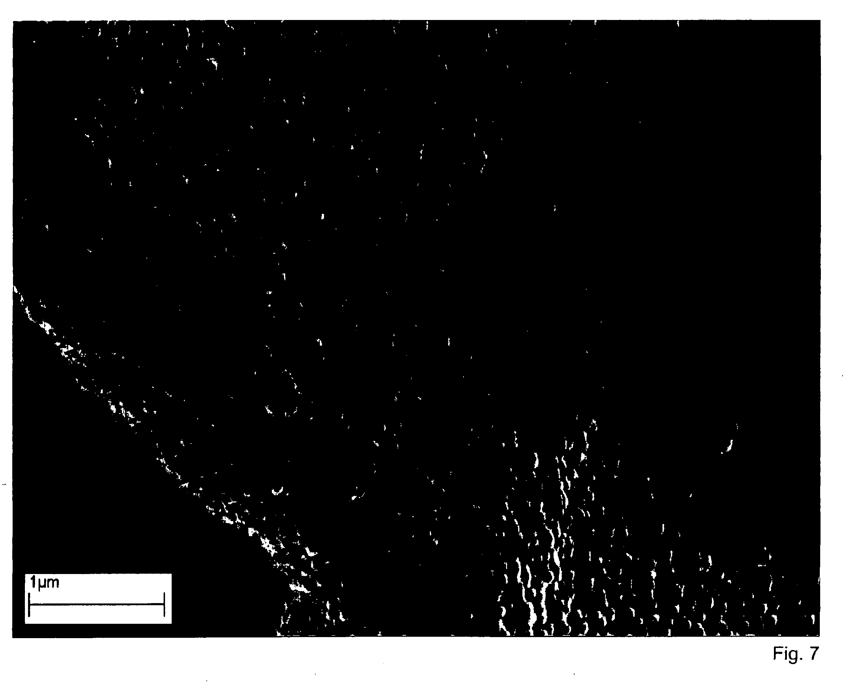

- Fig. 7: REM-Aufnahme des erfindungsgemäßen Beispiels 2.

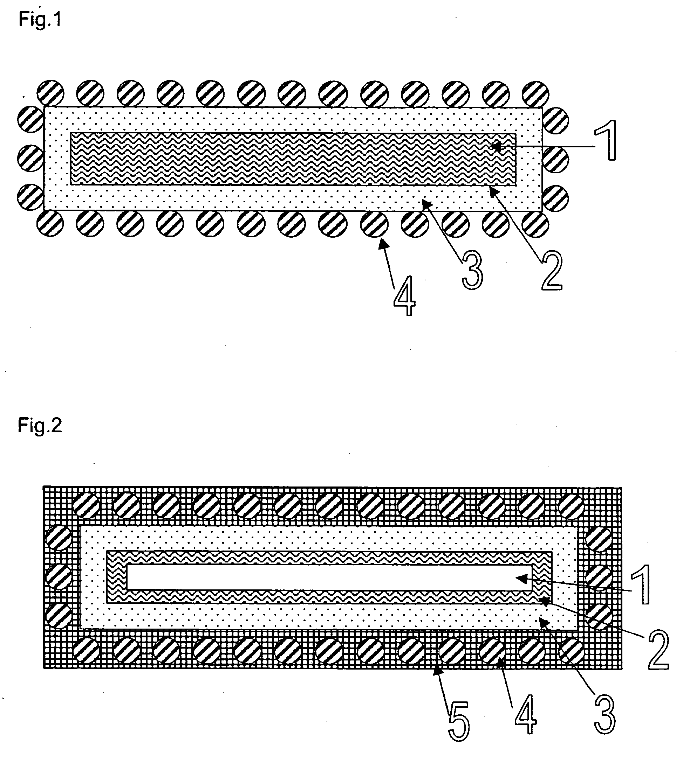

Bei den Fig. 1 und 2 ist eine elektromagnetische Wellen reflektierende Oberfläche bzw. Spiegelschicht mit dem Bezugszeichen 2 bezeichnet. Es kann sich dabei um eine dünne Schicht aus z. B. Aluminium handeln. Die Spiegelschicht 2 kann aber auch eine metallische Schicht sein, welche auf einem Träger 1 aufgebracht ist. Bei dem Träger 1 kann es sich um die zu beschichtenden Pigmente handeln. Die Spiegelschicht 2 kann entfallen, wenn es sich um ein metallisch glänzendes Pigment bzw. Reflektorkern, beispielsweise ein Aluminiumpigment, handelt.

Die Funktion des Effektpigments ist folgende:

Bei einer Einstrahlung von Umgebungslicht oder von Licht aus einer Lichtquelle, wie einer Glühbirne, einem LASER, einer Leuchtstoffröhre oder einer Xenonlampe auf eine der in Fig. 1, 2 und 3 gezeigten Effektpigmente wird dieses Licht an der Spiegelschicht 2 reflektiert. Durch eine Wechselwirkung des reflektierten Lichts mit der aus den Metallpartikeln gebildeten Absorber- bzw. Metallpartikelschicht 4 wird ein Teil des eingestrahlten Lichts absorbiert. Das reflektierte Licht weist ein von mehreren Parametern, wie z. B. den optischen Konstanten des Schichtaufbaus, abhängiges charakteristisches Spektrum auf. Das Effektpigment erscheint farbig. Die Färbung beeinflusst auf Grund der sehr geringen Schichtdicke und auf Grund der homogenen Aufbringung nicht die Eigenschaft des metallischen Glanzes des beschichteten Pigmentes. Der so erhaltene Farbeindruck kann winkelabhängig sein und kann sowohl mit dem bloßen Auge als auch mit einem im Reflexionsmodus arbeitenden Photometer, vorzugsweise ein Spektralphotometer, identifiziert werden. Ein solches Photometer kann beispielsweise die Färbung der Oberflächen aus zwei verschiedenen Winkeln erfassen. Das geschieht entweder mittels eines Detektors dadurch, dass zwei Lichtquellen verwendet werden, welche entsprechen angeschaltet werden und der Detektor entsprechend verkippt wird, oder dadurch dass zwei Photometer die aus zwei verschiedenen Winkeln beleuchtete Probe aus den beiden entsprechenden Winkeln vermessen.

Hinsichtlich der für die Erzeugung der Wechselwirkungen einzuhaltenden Parameter wird auf die US 5,611,998 sowie die WO 99/47702 verwiesen, deren Offenbarungsgehalt hiermit einbezogen wird.

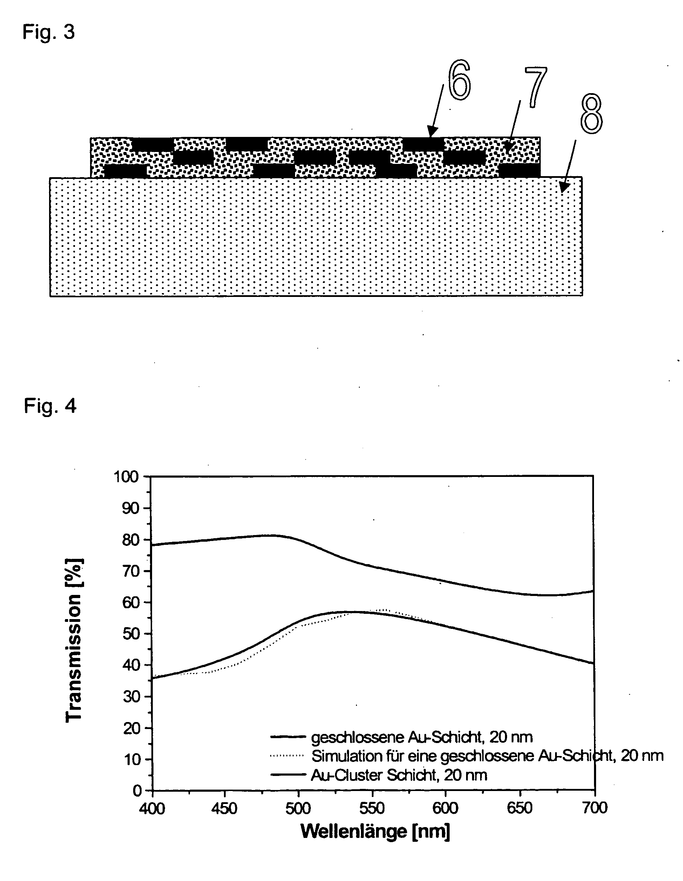

Die Fig. 4 verdeutlicht den Unterschied der erfindungsgemäßen Absorber- bzw. Metallpartikelschichten im Vergleich zu herkömmlichen Schichten, welche aus einer durchgehenden bzw. geschlossenen Metallschicht gebildet sind. Die in Fig. 4 gezeigten Spektren sind an mit homogenen Metallschichten auf aus Glas hergestellten Objektträgern bzw. mit metallischen Kolloiden beschichteten Objektträgern gemessen worden. Die Objektträger weisen eine Dicke von 1 mm auf. Auf diesen Objektträgern ist eine Goldschicht mit einer Dicke von je 20 nm aufgebracht.

Ein Vergleich der in Fig. 4 dargestellten Spektren zeigt, dass insbesondere Metallpartikelschichten mit einer Dicke im Bereich bis 20 nm einen charakteristischen Absorptionspeak aufweisen, der zu niedrigeren Wellenlängen hin verschoben ist. Der Absorptionspeak ist stark verbreitert und asymmetrisch ausgebildet. Die aus der Computersimulation zugänglichen Spektren basieren auf optischen Konstanten makroskopischer Messwerte und ähneln so sehr stark den homogenen Metallschichten.

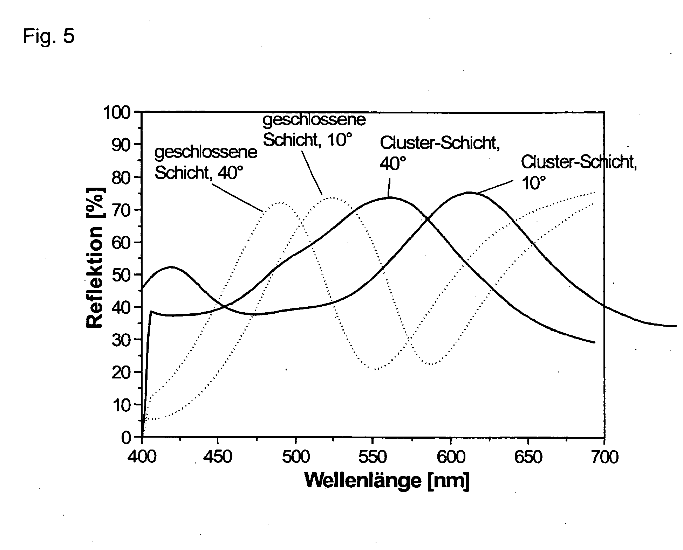

Die in Fig. 5 gezeigten Spektren einer Markierung gemäß Fig. 1 wurden mittels eines UV/VIS-Spektrometers Lambda 25 von Perkin Elmer unter Verwendung eines Reflektionseinsatzes gemessen. Aus Fig. 5 ist ersichtlich, dass die Intensitätsmaxima mit steigendem Beobachtungswinkel zu kürzeren Wellenlängen hin sich verschieben. Die in Fig. 5 gezeigten Spektren sind an mit homogenen Metallschichten auf Objektträgern bzw. metallischen Kolloiden beschichteten Objektträgern gemessen worden. Die Objektträger weisen eine Dicke von 1 mm auf. Auf diesen Objektträgern ist eine Goldschicht mit einer Dicke von je 20 nm aufgebracht. Die Metallpartikelschicht ist überdeckt mit einer aus MgF₂ hergestellten Abstandsschicht mit einer Dicke von 270 nm. Die Abstandsschicht ist wiederum überdeckt von einer Spiegelschicht mit einer Dicke von 20 nm. Die vorgenannten Schichten sind mittels chemischer Kopplung bzw. Vakuumbeschichtung auf die Objektträger aufgetragen worden. Die Messungen sind jeweils unter einem Beobachtungswinkel von 18° erfolgt.

Ein Vergleich der in Fig. 5 dargestellten Reflexionsspektren zeigt, dass Metallpartikelschichten ein charakteristisches Absorptionsspektrum aufweisen, das im Vergleich zu der nicht aus Clustern gebildeten Schicht zu höheren Wellenlängen hin verschoben ist. Im Gegensatz zu Fig. 4, welche das reine Transmissionsspektrum einer aus Clustern und einer nicht aus Clustern gebildeten Absorptionsschicht zeigt, stellt Fig. 5 die Reflexion eines den erfindungsgemäßen Aufbau entsprechenden Modellsystems dar.

### Beispiele:

### Beispiel 1:

### a) - Herstellung dielektrisch beschichteter Reflektorkerne:

100 g einer Aluminiumplättchen bzw. Aluminium-Flakes Metallpigmentpaste (Metallux 2154 der Fa. ECKART) werden in 500 ml 75%igem Ethanol dispergiert, mit 242 g Tetraethoxysilan versetzt und zum Sieden erhitzt. Innerhalb von 40 h wird dann eine Mischung aus 10 g einer 25%igen Ammoniaklösung in 160 g Wasser zudosiert. Nach Ende der Dosierung wird noch weitere 10 h unter Rückfluss gerührt, danach wird das erhaltene Pigment abfiltriert und im Vakuum getrocknet. Es wird ein Produkt mit einem SiO₂-Gehalt von 50% sowie einem leicht bläulichem Farbton erhalten.

### b) - Silanisierung der dielektrisch beschichteten Reflektorkerne:

5 g der beschichteten Aluminium-Flakes aus Beispiel 1 werden mit 95%igem Ethanol gewaschen. Anschließend erfolgt Waschen mit bidestilliertem Wasser und Trocknen. Die Aluminium-Flakes werden in einer Lösung von 5 ml 3-Glycidyloxypropyl-trimethoxysilan in 95 ml 95%igem Ethanol 30 min dispergiert und anschließend mit 95%igem Ethanol zweimal gewaschen. Danach erfolgt Trocknung bei 80 C für 30 min. Die Aluminium-Flakes sind nun mit einer Schicht aus reaktiven Epoxy-Gruppen umgeben.

### c) - Herstellung von Gold-Nanopartikeln:

500 ml einer 1 mM Lösung von Hydrogen-tetrachloroaurate(III)-trihydrate in bidestilliertem Wasser werden in einen Erlenmeyerkolben gegeben und bis zum Kochen erhitzt. Danach erfolgt Zugabe von 50 ml einer 38,8 mM Natriumcitrat Lösung in bidestilliertem Wasser. Die Lösung wird unter weiterem Rühren für ca. 30 min bei dieser Temperatur gehalten. Es zeigt sich ein Farbumschlag von gelb nach blau nach rot. Nach Abkühlung wird die Lösung zentrifugiert und der Überstand dekantiert.

Die Goldpartikel werden nun mit 50 ml einer Lösung von 50 mM L-Cystein-Ethylester versetzt und 24 h stehen gelassen. Anschließend wird wieder auf das ursprüngliche Volumen mit bidestilliertem Wasser aufgefüllt und wieder zentrifugiert und dekantiert. Dies wird noch zweimal wiederholt. Am Ende erhält man Gold-Nanopartikel mit einem Durchmesser zwischen 10 und 20 nm die mit freien -NH₂ Gruppen umgeben sind.

### d) - Anbindung von amino-modifizierten Gold-Metallpartikeln an glycidyl-modifizierte dielektrisch beschichtete Reflektorkerne:

5 g der mit Epoxy-Gruppen funktionalisierten Aluminium-Flakes aus Beispiel 2 werden in einer Lösung aus von mit NH₂-Gruppen funktionalisierten Gold-Nanopartikeln in 0,1 M Pufferlösung mit pH=8 für 2 h bei Raumtemperatur gerührt wobei sich zwischen den Epoxy-Gruppen und den NH₂-Gruppen eine kovalente Bindung ausbildet. Anschließend werden die nun farbigen Aluminium-Flakes mit Wasser gewaschen und abfiltriert. Um eine durchgehende Beschichtung der Aluminium-Flakes mit Metallpartikeln zu gewährleisten können weitere Schichten von Goldpartikeln aufgebracht werden. Dazu wird zu den Aluminium-Flakes 50 ml eine 2 mM Lösung von Glutaraldehyd gegeben und für 3 h gerührt. Anschließend werden die Aluminium-Flakes abfiltriert und 3 mal mit Wasser gewaschen. Anschließend werden die Aluminium-Flakes wiederum in eine Lösung der funktionalisierten Goldpartikel gegeben und für 3 h inkubiert. Die letzen beiden Schritte können wiederholt werden, falls noch keine ausreichende Belegung erfolgt ist.

### Beispiel 2 - Auffällung von Silber-Nano-Metallpartikeln auf dielektrisch modifizierten Reflektorkernen

8 g Silbernitrat werden in 500 ml bidestilliertem Wasser gelöst und dann mit so viel konzentrierter NH₃-Lösung versetzt, bis sich der zwischenzeitlich entstehende braune Niederschlag wieder aufgelöst hat. Unter Rühren werden dann 20 g des nach Beispiel 1 erhaltenen dielektrisch beschichteten Metalleffektpigments, 5 g einer gesättigten Glucoselösung und 5 g einer 10% igen KOH-Lösung zugegeben. Innerhalb weniger Sekunden kommt es zu einer bläulich-lila Verfärbung der Reaktionslösung. Nach 30 min wird das resultierende Pigment abfiltriert, gewaschen und im Vakuum getrocknet. Das erhaltene Produkt zeigt in Abhängigkeit des Beobachtungswinkels einen starken Farbumschlag von grün über türkis nach lila.

### Bezugszeichenliste

- 1: Metallischer Reflektorkern
- 2: Spiegelschicht bzw. spiegelnde Oberfläche
- 3: inerte Abstandsschicht
- 4: diskrete Metallpartikel
- 5: Metallpartikel bindende Schicht und/oder Schutzschicht
- 6: Effektpigment aus Fig. 1 oder 2
- 7: Lack für Aufbringung von Pigmenten
- 8: Gegenstand des täglichen Gebrauchs

## Patentansprüche

1. Effektpigment mit
a) einem plättchenförmigen metallischen Reflektorkern (1),
b) einer auf dem Reflektorkern (1) aufgebrachten Abstandsschicht (3) aus einem dielektrischen Material und
c) einer auf der Abstandsschicht (3) aufgebrachten semitransparenten Absorberschicht (4) umfassend im Wesentlichen diskrete Metallpartikel mit einem mittleren Durchmesser von 1 bis 100 nm.

2. Effektpigment nach Anspruch 1, **dadurch gekennzeichnet, dass** auf der Absorberschicht (4) zumindest eine Schutzschicht (5) aufgebracht ist.

3. Effektpigment nach Anspruch 1 oder 2, **dadurch gekennzeichnet, dass** der metallische Reflektorkern (1) aus der Gruppe bestehend aus Aluminium, Kupfer, Zink, Eisen, Titan, Chrom, Silber, Gold, Nickel und deren Legierungen hergestellt ist.

4. Effektpigment nach Anspruch 1, **dadurch gekennzeichnet, dass** der metallische Reflektorkern (1) aus einem nicht metallischem plättchenförmigen Substrat mit einer darauf aufgebrachten metallischen Reflektorschicht besteht.

5. Effektpigment nach einem der vorstehenden Ansprüche, **dadurch gekennzeichnet, dass** der metallische Reflektorkern (1) in seiner Längsausdehnung einen d₅₀-Wert der Summendurchgangsverteilung der Größenverteilungskurve von 1 bis 500 µm, bevorzugt 5 bis 100 µm aufweist.

6. Effektpigment nach einem der vorstehenden Ansprüche, **dadurch gekennzeichnet, dass** der metallische Reflektorkern (1) eine mittlere Mindestschichtdicke von 40 nm aufweist.

7. Effektpigment nach einem der vorstehenden Ansprüche, **dadurch gekennzeichnet, dass** die Abstandsschicht (3) eine Schichtdicke von 20 bis 1000 nm, bevorzugt von 80 bis 600 nm, aufweist.

8. Effektpigment nach einem der vorstehenden Ansprüche, **dadurch gekennzeichnet, dass** die Abstandsschicht (3) aus einem anorganischen oder organischen Materialien hergestellt ist.

9. Effektpigment nach Anspruch 8, **dadurch gekennzeichnet, dass** die Abstandsschicht (3) aus zumindest einem der folgenden Materialien hergestellt ist: Metalloxid, Metalloxidhydrat, Metallnitrid, Metalloxynitrid, Metallcarbid, Metallfluorid, insbesondere aus Siliziumoxid, Siliciumoxidhydrat, Siliciumcarbid, Siliciumnitrid, Aluminiumoxid, Aluminiumoxidhydrat, Magnesiumfluorid, Zinnoxid, -nitrid, Zinkoxid oder -nitrid.

10. Effektpigment nach Anspruch 8, **dadurch gekennzeichnet, dass** die Abstandsschicht (3) aus zumindest einem der folgenden organischen Polymere oder Mischungen davor hergestellt ist: Polycarbonat (PC); Polyethylen (PE), Polypropylen (PP), Polyurethan (PU), Polyimid (PI), Polystyrol (PS) oder Polymethacrylat (PMA), Polyvinylalkohol (PVA), Polyacrylaten (PA), Nitrocellulose (NC).

11. Effektpigment nach einem der vorstehenden Ansprüche, **dadurch gekennzeichnet, dass** die Oberfläche der Abstandsschicht (3) aktiviert ist.

12. Effektpigment nach einem der vorhergehenden Ansprüche, **dadurch gekennzeichnet, dass** die Oberfläche durch eine Beschichtung mit organofunktionellen Silanen, vorzugsweise einem der folgenden organofunktionellen Silane aktiviert ist: Epoxysilan, Mercaptosilan, Isocyanatosilan, Aminosilan oder Mischungen davon.

13. Effektpigment nach einem der vorstehenden Ansprüche, **dadurch gekennzeichnet, dass** die diskreten Metallpartikel aus einem der folgenden Metalle: Gold, Silber, Kupfer, Palladium, Platin, Nickel, Titan, Chrom, Zink, Zinn, Indium, Kobalt oder aus einer eines der vorgenannten Metalle als wesentlichen Bestandteil enthaltenden Legierung hergestellt sind.

14. Effektpigment nach einem der vorstehenden Ansprüche, **dadurch gekennzeichnet, dass** die diskreten Metallpartikel aus Core-Shell-Partikeln bestehen.

15. Effektpigment nach Anspruch 14, **dadurch gekennzeichnet, dass** die Core-Shell-Partikel einen Kern, bestehend aus einem Metall, und einer Hülle, bestehend aus einem Metall, welches verschieden von demjenigen des Kerns ist, einem Halbleitermaterial oder einem Dielektrikum ist, zusammengesetzt sind.

16. Effektpigment nach Anspruch 15, **dadurch gekennzeichnet, dass** der Kern der Core-Shell-Partikel aus einem der folgenden Metalle: Gold, Silber, Kupfer, Palladium, Platin, Nickel, Titan, Chrom, Zink, Zinn, Indium, Kobalt oder aus einer eines der vorgenannten Metalle als wesentlichen Bestandteil enthaltenden Legierung hergestellt ist.

17. Effektpigment nach Anspruch 15 oder 16, **dadurch gekennzeichnet, dass** die Hülle der Core-Shell-Partikel aus einem der folgenden Halbleiter hergestellt ist: Cadmiumsulfid, Cadmiumselenid, Titandioxid, Zinksulfid, Zinkoxid, Bleisulfid.

18. Effektpigment nach einem der Ansprüche 15 oder 16, **dadurch gekennzeichnet, dass** die Hülle der Core-Shell-Partikel aus einem der folgenden Nichtleiter oder aus einer Mischung davon hergestellt ist: Oxid, Hydroxid, Oxidhydrat des zur Herstellung des Kerns verwandten Materials oder ein aus Oxidhydrat der folgenden Elemente: Silicium, Aluminium, Zirkon und deren Mischungen.

19. Effektpigment nach einem der Ansprüche 14 bis 18, **dadurch gekennzeichnet, dass** die Core-Shell-Partikel oberflächenmodifiziert sind.

20. Effektpigment nach Anspruch 19, **dadurch gekennzeichnet, dass** die Core-Shell-Partikel zur Oberflächenmodifizierung mit einem der folgenden Materialien beschichtet sind: Silanen, Titanaten, Zirkonaten, Aminen, Alkoholen, Thiolen.

21. Effektpigment nach Anspruch 19, **dadurch gekennzeichnet, dass** zur Oberflächenmodifizierung die Core-Shell-Partikel mit einem Polymere beschichtet sind.

22. Effektpigment nach einem der vorstehenden Ansprüche, **dadurch gekennzeichnet, dass** die diskreten Metallpartikel eine mittlere Teilchengröße von 2 bis 50 nm, bevorzugt von 3 bis 35 nm, besitzen.

23. Effektpigment nach einem der vorstehenden Ansprüche, **dadurch gekennzeichnet, dass** die diskreten Metallpartikel von einer dielektrischen Matrix umhüllt und/oder darin eingebettet sind.

24. Effektpigment nach einem der vorstehenden Ansprüche, **dadurch gekennzeichnet, dass** die Schichtdicke der Absorberschicht (4) maximal das fünffache, bevorzugt maximal das doppelte, des mittleren Durchmessers der diskreten Metallpartikel beträgt.

25. Effektpigment nach Anspruch 24, **dadurch gekennzeichnet, dass** der mittlere Durchmesser der diskreten Metallpartikel 10 bis 25 nm und die Schichtdicke der Absorberschicht 20 bis 40 nm beträgt.

26. Farbiges Effektpigment nach einem der vorstehenden Ansprüche, **dadurch gekennzeichnet, dass** die Schutzschicht aus einem organischen Kunstharz oder aus einem Metalloxid besteht.

27. Verfahren zur Herstellung eines Effektpigments nach Anspruch 1 mit folgenden Schritten:
aa) Beschichten plättchenförmiger metallischer Reflektorkerne (1) mit einer aus einem dielektrischen Material hergestellten Abstandsschicht (3) und
bb) Aufbringen einer insgesamt semitransparenten Absorberschicht (4) auf die Abstandsschicht (3), wobei die Absorberschicht (4) im Wesentlichen diskrete Metallpartikeln mit einem mittleren Durchmesser von 1 bis 100 nm aufweist.

28. Verfahren nach Anspruch 27, wobei auf die Absorberschicht (4) zumindest eine Schutzschicht aufgebracht wird.

29. Verfahren zur Herstellung eines Effektpigments nach Anspruch 27 oder 28, **dadurch gekennzeichnet, dass** das Aufbringen der Abstandsschicht (3) auf die Reflektorkerne (1) mittels Sol-Gel-Verfahren erfolgt.

30. Verfahren zur Herstellung eines Effektpigments nach Anspruch 27 oder 28, **dadurch gekennzeichnet, dass** das Aufbringen der Abstandsschicht (3) auf die Reflektorkerne (1) in einer Wirbelschicht mittels CVD-Verfahren erfolgt.

31. Verfahren zur Herstellung eines Effektpigments nach einem der Ansprüche 28 bis 30, **dadurch gekennzeichnet, dass** die diskreten Metallpartikel mit einem lösungsbasierten Hetero-Koagulationsprozess aufgebracht werden.

32. Verfahren zur Herstellung eines Effektpigments nach einem der Ansprüche 28 bis 31, **dadurch gekennzeichnet, dass** die diskreten-Metallpartikel nasschemisch durch Reduktion von Metallsalzen auf der Abstandsschicht (3) abgeschieden werden.

33. Verfahren zur Herstellung eines nach einem der Ansprüche 28 bis 31, **dadurch gekennzeichnet, dass** die diskreten Metallpartikel mittels Sol-Gel-Verfahren oder in einer Wirbelschicht mittels CVD-Verfahren mit einer Schutzschicht überzogen werden.

34. Verfahren zur Herstellung eines farbigen Effektpigments nach einem der Ansprüche 28 bis 32, **dadurch gekennzeichnet, dass** die diskreten Metallpartikel entweder bei der Herstellung oder danach mit Funktionsgruppen tragenden Molekülen stabilisiert bzw. modifiziert werden.

35. Verwendung eines Effektpigments nach einem der Ansprüche 1 bis 26 in Trockenpräparaten und Pigmentpräparationen, wie Pellets, Würstchen, Tabletten, Brickets oder Granulaten.

36. Verwendung eines Effektpigments nach einem der Ansprüche 1 bis 26 in Farben, Lacken, Pulverlacken, Druckfarben, Kunststoffen, kosmetischen Formulierungen, keramischen Materialien, Papier, Gläsern oder Sicherheitsanwendungen.

## Claims

1. An effect pigment comprising
a) a platelet-shaped metallic reflector core (1),
b) a spacer layer (3) of a dielectric material applied on the reflector core (1), and
c) a semitransparent absorber layer (4) applied on the spacer layer (3) and comprising essentially discrete metal particles having an average diameter of from 1 to 100 nm.

2. The effect pigment according to claim 1, **characterized in that** at least one protective layer (5) is applied on the absorber layer (4).

3. The effect pigment according to claim 1 or 2, **characterized in that** the metallic reflector core (1) is produced from the group consisting of aluminium, copper, zinc, iron, titanium, chromium, silver, gold, nickel and alloys thereof.

4. The effect pigment according to claim 1, **characterized in that** the metallic reflector core (1) consists of a non-metallic platelet-shaped substrate having a metallic reflector layer applied thereon.

5. The effect pigment according to any one of the preceding claims, **characterized in that** the metallic reflector core (1) has in its longitudinal dimension a d₅₀ value of from 1 to 500 µm and preferably of from 5 to 100 µm for the cumulative undersize distribution of the size distribution curve.

6. The effect pigment according to any one of the preceding claims, **characterized in that** the metallic reflector core (1) has an average minimum layer thickness of 40 nm.

7. The effect pigment according to any one of the preceding claims, **characterized in that** the spacer layer (3) has a layer thickness of from 20 to 1000 nm and preferably of from 80 to 600 nm.

8. The effect pigment according to any one of the preceding claims, **characterized in that** the spacer layer (3) is made from an inorganic or organic material.

9. The effect pigment according to claim 8, **characterized in that** the spacer layer (3) is made from at least one of the following materials: metal oxide, metal oxide hydrate, metal nitride, metal oxynitride, metal carbide, metal fluoride, in particular from silicon oxide, silicon oxide hydrate, silicon carbide, silicon nitride, aluminium oxide, aluminium oxide hydrate, magnesium fluoride, tin oxide, tin nitride, zinc oxide or zinc nitride.

10. The effect pigment according to claim 8, **characterized in that** the spacer layer (3) is made from at least one of the following organic polymers or mixtures thereof: polycarbonate (PC), polyethylene (PE), polypropylene (PP), polyurethane (PU), polyimide (PI), polystyrene (PS) or polymethacrylate (PMA), polyvinyl alcohol (PVA), polyacrylates (PA), nitrocellulose (NC).

11. The effect pigment according to any one of the preceding claims, **characterized in that** the surface of the spacer layer (3) is activated.

12. The effect pigment according to any one of the preceding claims, **characterized in that** the surface is activated by coating with organofunctional silanes, preferably with one of the following organofunctional silanes: epoxysilane, mercaptosilane, isocyanatosilane, aminosilane or mixtures thereof.

13. The effect pigment according to any one of the preceding claims, **characterized in that** the discrete metal particles are made from one of the following metals: gold, silver, copper, palladium, platinum, nickel, titanium, chromium, zinc, tin, indium, cobalt or from an alloy comprising one of the aforementioned metals as an essential component.

14. The effect pigment according to any one of the preceding claims, **characterized in that** the discrete metal particles consist of core-shell particles.

15. The effect pigment according to claim 14, **characterized in that** the core-shell particles are composed of a core consisting of a metal and a shell consisting of a metal other than that of the core, a semiconductor material or a dielectric.

16. The effect pigment according to claim 15, **characterized in that** the core of the core-shell particles is made from one of the following metals: gold, silver, copper, palladium, platinum, nickel, titanium, chromium, zinc, tin, indium, cobalt or from an alloy comprising one of the aforementioned metals as an essential component.

17. The effect pigment according to claim 15 or 16, **characterized in that** the shell of the core-shell particles is made from one of the following semiconductors: cadmium sulfide, cadmium selenide, titanium dioxide, zinc sulfide, zinc oxide, lead sulfide.

18. The effect pigment according to claim 15 or 16, **characterized in that** the shell of the core-shell particles is produced from one of the following non-conductors or from a mixture thereof: oxide, hydroxide, oxide hydrate of the material used for producing the core or from an oxide hydrate of the following elements: silicon, aluminium, zirconium and mixtures thereof.

19. The effect pigment according to any one of claims 14 to 18, **characterized in that** the core-shell particles are surface modified.

20. The effect pigment according to claim 19, **characterized in that** the core-shell particles are surface modified by coating with one of the following materials: silanes, titanates, zirconates, amines, alcohols, thiols.

21. The effect pigment according to claim 19, **characterized in that** the core-shell particles are surface modified by coating with a polymer.

22. The effect pigment according to any one of the preceding claims, **characterized in that** the discrete metal particles have an average particle size of from 2 to 50 nm and preferably of from 3 to 35 nm.

23. The effect pigment according to any one of the preceding claims, **characterized in that** the discrete metal particles are enveloped by and/or embedded in a dielectric matrix.

24. The effect pigment according to any one of the preceding claims, **characterized in that** the layer thickness of the absorber layer (4) is not more than five times and preferably not more than twice the average diameter of the discrete metal particles.

25. The effect pigment according to claim 24, **characterized in that** the average diameter of the discrete metal particles is of from 10 to 25 nm and the layer thickness of the absorber layer is of from 20 to 40 nm.

26. The colored effect pigment according to any one of the preceding claims, **characterized in that** the protective layer consists of an organic synthetic resin or of a metal oxide.

27. A process for producing an effect pigment according to claim 1, comprising the steps of:
aa) coating platelet-shaped metallic reflector cores (1) with a spacer layer (3) made from a dielectric material and
bb) applying an overall semitransparent absorber layer (4) on the spacer layer (3), said absorber layer (4) comprising essentially discrete metal particles having an average diameter of from 1 to 100 nm.

28. The process according to claim 27, further comprising applying at least one protective layer on the absorber layer (4).

29. The process for producing an effect pigment according to claim 27 or 28, **characterized in that** the applying of the spacer layer (3) on the reflector cores (1) is effected using a sol-gel process.

30. The process for producing an effect pigment according to claim 27 or 28, **characterized in that** the applying of the spacer layer (3) on the reflector cores (1) is effected in a fluidized bed using a CVD process.

31. The process for producing an effect pigment according to any one of claims 28 to 30, **characterized in that** the discrete metal particles are applied using a solution-based hetero coagulation process.

32. The process for producing an effect pigment according to any one of claims 28 to 31, **characterized in that** the discrete metal particles are deposited on the spacer layer (3) wet chemically by reduction of metal salts.

33. The process for producing an effect pigment according to any one of claims 28 to 31, **characterized in that** the discrete metal particles are coated with a protective layer using a sol-gel process or in a fluidized bed using a CVD process.

34. The process for producing a colored effect pigment according to any one of claims 28 to 32, **characterized in that** the discrete metal particles are stabilized or modified either in the course of production or thereafter with molecules bearing functional groups.

35. The use of an effect pigment according to any one of claims 1 to 26 in dry products and pigment preparations, such as pellets, small sausages, tablets, briquettes or granules.

36. The use of an effect pigment according to any one of claims 1 to 26 in paints, varnishes, powder coatings, printing inks, plastics, cosmetic formulations, ceramic materials, paper, glasses or security applications.

## Revendications

1. Pigment à effet, comportant :
a) un noyau réflecteur métallique (1), en forme de plaquette,
b) une couche intercalaire (3) en un matériau diélectrique, déposée sur le noyau réflecteur (1),
c) et une couche absorbante (4) semi-transparente, déposée sur la couche intercalaire (3) et comprenant essentiellement des particules métalliques disjointes dont le diamètre moyen vaut de 1 à 100 nm.

2. Pigment à effet, conforme à la revendication 1, **caractérisé en ce que** sur la couche absorbante (4) est déposée au moins une couche protectrice (5).

3. Pigment à effet, conforme à la revendication 1 ou 2, **caractérisé en ce que** le noyau réflecteur métallique (1) est fait d'un métal choisi dans l'ensemble constitué par les suivants : aluminium, cuivre, zinc, fer, titane, chrome, argent, or et nickel, ainsi que leurs alliages.

4. Pigment à effet, conforme à la revendication 1, **caractérisé en ce que** le noyau réflecteur métallique (1) est constitué d'un substrat non-métallique en forme de plaquette sur lequel est déposée une couche réflectrice métallique.

5. Pigment à effet, conforme à l'une des revendications précédentes, **caractérisé en ce que** le noyau réflecteur métallique (1) présente, pour sa longueur, une valeur du paramètre d₅₀, fournie par la courbe de distribution cumulée des tailles de particules, de 1 à 500 µm et de préférence de 5 à 100 µm.

6. Pigment à effet, conforme à l'une des revendications précédentes, **caractérisé en ce que** le noyau réflecteur métallique (1) présente une épaisseur de couche minimale moyenne de 40 nm.

7. Pigment à effet, conforme à l'une des revendications précédentes, **caractérisé en ce que** la couche intercalaire (3) présente une épaisseur de 20 à 1000 nm, et de préférence de 80 à 600 nm.

8. Pigment à effet, conforme à l'une des revendications précédentes, **caractérisé en ce que** la couche intercalaire (3) est faite d'un matériau inorganique ou organique.

9. Pigment à effet, conforme à la revendication 8, **caractérisé en ce que** la couche intercalaire (3) est faite d'au moins un matériau des types suivants : oxyde de métal, hydrate d'oxyde de métal, nitrure de métal, oxy-nitrure de métal, carbure de métal et fluorure de métal, et en particulier, d'au moins l'un des matériaux suivants : oxyde de silicium, oxyde de silicium hydraté, carbure de silicium, nitrure de silicium, oxyde d'aluminium, oxyde d'aluminium hydraté, fluorure de magnésium, oxyde d'étain, nitrure d'étain, oxyde de zinc et nitrure de zinc.

10. Pigment à effet, conforme à la revendication 8, **caractérisé en ce que** la couche intercalaire (3) est faite d'au moins un polymère organique des types suivants ou bien d'un mélange de tels polymères : polycarbonate (PC), polyéthylène (PE), polypropylène (PP), polyuréthane (PU), polyimide (PI), polystyrène (PS), polyméthacrylate (PMA), poly(alcool vinylique) (PVA), polyacrylate (PA), et nitrocellulose (NC).

11. Pigment à effet, conforme à l'une des revendications précédentes, **caractérisé en ce que** la surface de la couche intercalaire (3) est activée.

12. Pigment à effet, conforme à l'une des revendications précédentes, **caractérisé en ce que** la surface est activée à l'aide d'un revêtement de silane à fonction organique, et de préférence d'un silane à fonction organique de l'un des types suivants : époxy-silane, mercaptosilane, isocyanato-silane, et amino-silane, ou d'un mélange de tels silanes.

13. Pigment à effet, conforme à l'une des revendications précédentes, **caractérisé en ce que** les particules métalliques disjointes sont faites de l'un des métaux suivants : or, argent, cuivre, palladium, platine, nickel, titane, chrome, zinc, étain, indium ou cobalt, ou d'un alliage comportant l'un de ces métaux en guise de principal composant.

14. Pigment à effet, conforme à l'une des revendications précédentes, **caractérisé en ce que** les particules métalliques disjointes sont des particules à structure noyau-coque.

15. Pigment à effet, conforme à la revendication 14, **caractérisé en ce que** les particules à structure noyau-coque se composent d'un noyau, fait d'un métal, et d'une coque, faite d'un métal différent de celui du noyau ou d'un matériau semi-conducteur ou diélectrique.

16. Pigment à effet, conforme à la revendication 15, **caractérisé en ce que** le noyau des particules à structure noyau-coque est fait de l'un des métaux suivants : or, argent, cuivre, palladium, platine, nickel, titane, chrome, zinc, étain, indium ou cobalt, ou d'un alliage comportant l'un de ces métaux en guise de principal composant.

17. Pigment à effet, conforme à la revendication 15 ou 16, **caractérisé en ce que** la coque des particules à structure noyau-coque est faite de l'un des matériaux semi-conducteurs suivants : sulfure de cadmium, séléniure de cadmium, dioxyde de titane, sulfure de zinc, oxyde de zinc et sulfure de plomb.

18. Pigment à effet, conforme à la revendication 15 ou 16, **caractérisé en ce que** la coque des particules à structure noyau-coque est faite de l'un des matériaux non-conducteurs suivants ou d'un mélange de ces matériaux : oxydes, hydroxydes ou hydrates d'oxyde des matériaux mentionnés à propos du noyau, ou encore de l'un des hydrates d'oxyde des éléments suivants : silicium, aluminium et zirconium, ou d'un mélange de tels hydrates d'oxyde.

19. Pigment à effet, conforme à l'une des revendications 14 à 18, **caractérisé en ce que** la surface des particules à structure noyau-coque est modifiée.

20. Pigment à effet, conforme à la revendication 19, **caractérisé en ce qu'**on a revêtu les particules à structure noyau-coque, pour modifier leur surface, d'un matériau choisi parmi les suivants : silanes, titanates, zirconates, amines, alcools et thiols.

21. Pigment à effet, conforme à la revendication 19, **caractérisé en ce qu'**on a revêtu d'un polymère les particules à structure noyau-coque, pour modifier leur surface.

22. Pigment à effet, conforme à l'une des revendications précédentes, **caractérisé en ce que** les particules métalliques disjointes présentent une taille moyenne de particules de 2 à 50 nm, et de préférence de 3 à 35 nm.

23. Pigment à effet, conforme à l'une des revendications précédentes, **caractérisé en ce que** les particules métalliques disjointes sont enrobées d'une matrice diélectrique et/ou noyées dedans.

24. Pigment à effet, conforme à l'une des revendications précédentes, **caractérisé en ce que** l'épaisseur de la couche absorbante (4) vaut au plus 5 fois, et de préférence au plus 2 fois, le diamètre moyen des particules métalliques disjointes.

25. Pigment à effet, conforme à la revendication 24, **caractérisé en ce que** le diamètre moyen des particules métalliques disjointes vaut de 10 à 25 nm et l'épaisseur de la couche absorbante vaut de 20 à 40 nm.

26. Pigment à effet, conforme à l'une des revendications précédentes, **caractérisé en ce que** la couche protectrice est faite d'une résine artificielle organique ou d'un oxyde de métal.

27. Procédé de fabrication d'un pigment à effet conforme à la revendication 1, lequel procédé comporte les étapes suivantes :
aa) revêtir des noyaux réflecteurs métalliques (1), en forme de plaquettes, d'une couche intercalaire (3) faite d'un matériau diélectrique ;
bb) et déposer sur cette couche intercalaire (3) une couche absorbante (4), semi-transparente dans l'ensemble, qui comprend essentiellement des particules métalliques disjointes dont le diamètre moyen vaut de 1 à 100 nm.

28. Procédé conforme à la revendication 27, dans lequel on dépose au moins une couche protectrice sur la couche absorbante (4).

29. Procédé de fabrication d'un pigment à effet, conforme à la revendication 27 ou 28, **caractérisé en ce qu'**on effectue le dépôt de la couche intercalaire (3) sur les noyaux réflecteurs (1) selon un procédé sol-gel.

30. Procédé de fabrication d'un pigment à effet, conforme à la revendication 27 ou 28, **caractérisé en ce qu'**on effectue le dépôt de la couche intercalaire (3) sur les noyaux réflecteurs (1) dans un lit fluidisé, selon un procédé CVD (dépôt chimique à partir d'une phase vapeur).

31. Procédé de fabrication d'un pigment à effet, conforme à l'une des revendications 28 à 30, **caractérisé en ce qu'**on effectue le dépôt des particules métalliques disjointes selon un procédé d'hétéro-coagulation à partir d'une solution.

32. Procédé de fabrication d'un pigment à effet, conforme à l'une des revendications 28 à 31, **caractérisé en ce que** les particules métalliques disjointes sont déposées sur la couche intercalaire (3) par réduction de sels de métaux, par voie chimique humide.

33. Procédé de fabrication d'un pigment à effet, conforme à l'une des revendications 28 à 31, **caractérisé en ce que** les particules métalliques disjointes sont revêtues d'une couche protectrice selon un procédé sol-gel, ou bien dans un lit fluidisé, selon un procédé CVD.

34. Procédé de fabrication d'un pigment à effet coloré, conforme à l'une des revendications 28 à 32, **caractérisé en ce que** les particules métalliques disjointes sont stabilisées ou modifiées, lors de leur préparation ou après celle-ci, à l'aide de molécules porteuses de groupes fonctionnels.

35. Utilisation d'un pigment à effet, conforme à l'une des revendications 1 à 26, dans des préparations sèches et des préparations de pigment telles que pastilles, boudins, comprimés, briquettes ou granulats.

36. Utilisation d'un pigment à effet, conforme à l'une des revendications 1 à 26, dans des peintures, vernis, vernis en poudre, encres d'imprimerie, matières synthétiques, formulations cosmétiques, matériaux céramiques, papiers ou verres, ou dans des applications de sécurité.
